# EUROPÄISCHE PATENTANMELDUNG

(11) **EP 2 243 729 A2**
(43) Veröffentlichungstag der Anmeldung: **27.10.2010**
(21) Anmeldenummer: 10155488.9
(22) Anmeldetag: 04.03.2010
(51) Int. Cl.: B65G 17/00, B65G 47/68

(54) **Transportvorrichtung und Verfahren zum Zuführen von Flüssigkeitsbehältern zu einer Verpackungsmaschine**

(30) Priorität: 23.04.2009 DE 102009003818
(71) Anmelder: Krones AG, 93073 Neutraubling (DE)
(72) Erfinder: Mayer, Josef, 83209, Prien am Chiemsee (DE)
(74) Vertreter: Benninger, Johannes

(57) **Zusammenfassung**

Die vorliegende Erfindung betrifft eine Vorrichtung sowie ein Verfahren zum Transportieren von Flüssigkeitsbehältern (20) mit einer Transportvorrichtung (2), die mindestens zwei parallele Bänder (4₁, 4₂,...,4ₙ) umfasst, die durch Trennwände (6) räumlich voneinander getrennt sind, wobei die mindestens zwei Bänder (4₁, 4₂,...,4ₙ) einen gemeinsamen Antrieb (8) aufweisen. Dabei ist mindestens eine Rückhalteeinrichtung (10) kontinuierlich beidseitig entlang eines jeden Bandes (4₁, 4₂,..., 4ₙ) angeordnet, und dass mindestens eine Rückhalteeinrichtung (10) derart bewegbar ausgestaltet ist, dass die Flüssigkeitsbehälter (20) innerhalb einer Gasse (12) von der Vorschubbewegung des Bandes (4₁, 4₂,,,,, 4ₙ) zumindest teilweise entkoppelbar sind.

## Beschreibung

Die vorliegende Erfindung betrifft eine Vorrichtung sowie ein Verfahren zum Transportieren von Flüssigkeitsbehältern. Dabei ist die Vorrichtung mit mindestens einer Transportvorrichtung ausgestattet, die mindestens zwei parallele einzelne Bänder umfasst. Die einzelnen Bänder sind durch Trennwände räumlich voneinander getrennt. Zudem weisen die mindestens zwei Bänder einen gemeinsamen Antrieb auf.

Eine typische Anwendung derartiger Vorrichtungen ist die gleichmäßige Verteilung angeförderter Produkte oder Artikel auf einzelne Gassen einer mehrspurigen Transportvorrichtung. Die Transportvorrichtung selbst kann den Einlauf zu einer Verpackungsmaschine oder einer Maschine zum Zusammenstellen von Gebinden bilden. Bei einer solchen mehrspurigen Förderung können Situationen entstehen, bei denen in den einzelnen Gassen der Transportvorrichtung die zu transportierenden Artikel nicht gleichmäßig verteilt sind, was in einzelnen Gassen unter Umständen zu Stauungen führen kann. Um eine Gleichverteilung zu erreichen, sind den einzelnen Bändern der Transportvorrichtung jeweils individuell steuerbare Antriebsmotoren zugeordnet. Somit ist es mittels einer Geschwindigkeitssteuerung möglich, die einzelnen Bänder der Transportvorrichtung unterschiedlich anzutreiben, so dass eine Gleichverteilung der Artikel in den Gassen erreicht werden kann.

Die Deutsche Offenlegungsschrift DE 20 14 436 A offenbart eine Vorrichtung zum Auseinanderziehen und Anhalten von Transportbehältern wie bspw. Kisten oder dgl. eines Bandförderers. Dabei sind auf beiden Seiten des Förderbandes Längswangen angeordnet, die auf ihrer Oberseite jeweils eine Membran aufweisen. Diese nachgiebige Membran wirkt durch Dehnung in der Weise, dass die Transportbehälter von dem Transportband abgehoben werden und dadurch stillgesetzt werden können, ohne den Lauf des Transportbandes zu stören. Bei einer solchen Vorrichtung sind jedoch nur Behälter transportierbar, die mit einer Ausnehmung versehen sind, damit die Auflagefläche der Transportbehälter an den Längswangen gleiten kann.

Die Deutsche Patentschrift DE 10 2006 039 086 C offenbart ein Dosierband, das aus mehreren Transportbändern besteht, von denen jedes eine geschlossene Schlaufe bildet sowie endlos umlaufend antreibbar ist. Die Schlaufen sind derart angeordnet, dass sie mit den oberen Längen der Schlaufen seitlich aneinander anschließen und eine gemeinsame horizontale oder im Wesentlichen horizontale Transportfläche bilden. Um eine gleichmäßige Verteilung der Produkte in den einzelnen Spuren oder Gassen eines an das Dosierband anschließendes Transportband zu erreichen, ist bei den Bändern des Dosierbandes ein Antrieb mit einem einzigen Antriebsmotor vorgesehen. Die Transportbänder sind antriebsmäßig mit einem den Antriebsmotor verbindenden Getriebe verbunden, welches als Schaltgetriebe derart ausgebildet ist, dass die Geschwindigkeit wenigstens eines Transportbandes durch Schalten des Getriebes stufenförmig veränderbar ist. Die einzelnen Bänder des Transportbandes, welches dem Dosierband nachgeschaltet ist, werden mit einem einzigen Motor angetrieben, der allen Transportbändern die gleiche Geschwindigkeit verleiht.

Die Deutsche Gebrauchsmusterschrift DE 20 2008 009 166 U1 offenbart des Weiteren eine Vorrichtung zum Zuführen von Artikeln zu einer Verpackungsmaschine. An der Verpackungsmaschine ist dabei ein Transportband angeordnet, das aus mindestens zwei einzelnen Bändern aufgebaut ist. Die einzelnen Bänder sind voneinander durch Trennwände räumlich getrennt, wodurch mehrere Gassen gebildet sind. Für den Transport der Artikel auf dem Transportband wird dieses mit einem einzigen Antriebsmotor angetrieben. Dieser Antriebsmotor ist mit einer Schalteinrichtung verbunden, damit die einzelnen Bänder des Transportbandes mit unterschiedlichen Geschwindigkeiten beaufschlagbar sind. Die Vorrichtung umfasst zudem ein Dosierband, dem ebenfalls ein einziger Antriebsmotor zugeordnet ist, der das gesamte Dosierband mit einer einheitlichen Geschwindigkeit antreibt.

Aufgabe der Erfindung ist es, eine ökonomische Vorrichtung zum Transportieren von Artikeln wie Flüssigkeitsbehältern o. dgl. zu schaffen, bei der Lücken im Gassentransport vermieden werden und wobei eine optimierte Staudruckregelung in den einzelnen Gassen möglich ist.

Diese Aufgabe wird gelöst durch eine Vorrichtung, die die Merkmale des Anspruchs 1 umfasst. Bei dieser Vorrichtung sind mindestens einer Transportvorrichtung zum Transportieren von Flüssigkeitsbehältern mindestens zwei parallele Bänder zugeordnet, die durch Trennwände voneinander räumlich getrennt sind. Durch diese Trennwände bilden sich mehrere Gassen, in denen die einzelnen Bänder der Transportvorrichtung fluchten können. Weiterhin weisen die mindestens zwei parallelen Bänder der Transportvorrichtung einen gemeinsamen Antrieb auf, wodurch eine ökonomische Vorrichtung zur Verfügung gestellt ist, bei der auf zahlreiche Bauteile, die für eine Einzelansteuerung einer Transportvorrichtung notwendig wären, verzichtet werden kann. Der gemeinsame Antrieb kann beispielsweise als Elektromotor ausgestaltet sein.

Wie bereits in der Gebrauchsmusterschrift DE 20 2008 009 166 U1 beschrieben wurde kann der Transportvorrichtung ist ein Dosierband vorgeordnet sein, dem ebenfalls ein einziger Antriebsmotor zugeordnet ist, der das Dosierband mit einer einheitlichen Geschwindigkeit antreibt. Dem Dosierband kann zudem ein weiteres Transportband vorgeordnet sein, das dem Dosierband die Flüssigkeitsbehälter in Form eines Massenstroms zuführt. Der Massenstrom weist dabei eine Kugelpackung auf. Der Begriff Kugelpackung ist aus dem Stand der Technik dahingehend zu entnehmen, dass die einzelnen Flüssigkeitsbehälter, welche im Massenstrom transportiert werden, entsprechend dem Hexagonal-Closepack auf dem Dosierband vorgeordneten Transportband, bzw. auf einem zuminderst ersten Teilabschnitt des Dosierbandes angeordnet sind. Das Transportband sowie das Dosierband können als ein Mattenkettenförderer ausgebildet sein.

Zum Aufbrechen des Massenstroms, welcher mittels des Transportbandes angeliefert wird, können auch bei der vorliegenden Erfindung auf einem zweiten Teilabschnitt des Dosierbandes mehrere Separierelemente vorgesehen sein. Dabei sind die Separierelemente derart angeordnet, dass der Massenstrom der Flüssigkeitsbehälter in einzelne Gruppen von Behältern aufgespalten wird.

An einem Ende des Dosierbandes, welches der nachgeordneten Transportvorrichtung gegenüberliegt, sind ebenfalls mehrere Trennwände vorgesehen. Durch diese

Trennwände bilden sich mehrere Gassenabschnitte auf dem Endbereich des Dosierbandes aus. Diese Gassenabschnitte des Dosierbandes fluchten mit den Gassen der Transportvorrichtung. In den Gassenabschnitten liegen die Flüssigkeitsbehälter vereinzelt vor.

Entlang eines jeden Bandes der Transportvorrichtung ist mindestens eine Rückhalteeinrichtung vorgesehen, die vorzugsweise kontinuierlich beidseitig am jeweiligen Band angeordnet ist. Dabei ist mindestens eine dieser Rückhalteeinrichtungen derart beweglich ausgestaltet, dass die Flüssigkeitsbehälter innerhalb einer Gasse von der Vorschubbewegung des Bandes zumindest teilweise entkoppelt werden können.

Diese Rückhalteeinrichtungen können bspw. als Metallschienen oder dgl. ausgestaltet sein und/oder mit einer speziellen Oberflächenbeschichtung versehen werden, um eine Haftreibung in Zusammenwirkung mit einer Unterseite der Artikel bzw. Flüssigkeitsbehälter zu ermöglichen. Für diese Beschichtung eignet sich bspw. eine angeraute Oberfläche der Rückhalteeinrichtung oder eine Beschichtung aus elastischem Material. Somit werden die Flüssigkeitsbehälter u.a. daran gehindert sich fortzubewegen.

Die Rückhalteeinrichtungen können jedoch auch entlang der Transportrichtung an beiden Seiten der einzelnen Bänder der Transportvorrichtung angebracht sein. Mit dieser Ausführungsform wäre es möglich, dass sich beide Rückhalteeinrichtungen in gleicher Richtung bewegen, um die Flüssigkeitsbehälter vollständig von den einzelnen Bändern zu entkoppeln. Diese vollständige Entkopplung der Flüssigkeitsbehälter von den einzelnen Bändern kann durch eine Aktivierung der Rückhalteeinrichtung ausgelöst werden. Das bedeutet, dass die Flüssigkeitsbehälter von den Rückhalteeinrichtungen angehoben werden und somit der Kontakt zwischen den Flüssigkeitsbehältern und dem jeweiligen Band, an dem die Rückhalteeinrichtung aktiviert worden ist, entfällt. Bei der Deaktivierung der Rückhalteeinrichtung werden die Flüssigkeitsbehälter wieder auf das jeweilige Band abgesenkt und laufen somit wieder mit der Geschwindigkeit des Bandes in Transportrichtung weiter.

Die Rückhalteeinrichtung befindet sich in der nicht aktivierten Position unterhalb eines Förderniveaus der einzelnen Bänder der Transportvorrichtung, während sich die Rückhalteeinrichtung in der aktivierten Position oberhalb des Förderniveaus der einzelnen Bänder befindet. Diese Positionsänderung der Rückhalteeinrichtung wird durch eine im Wesentlichen vertikale Verschiebbarkeit bzw. durch eine Hubbewegung und damit einhergehende Bewegungsabläufe ermöglicht. Die Rückhalteeinrichtung des jeweiligen Bandes ist somit nach oben und/oder unten beweglich ausgebildet, wodurch die Flüssigkeitsbehälter über das Transportniveau des jeweiligen Bandes gehoben und damit von der Vorschubbewegung entkoppelt oder wieder auf das Band abgesenkt und damit mit der Bandgeschwindigkeit transportiert werden können.

Des Weiteren weisen die einzelnen Bänder der Transportvorrichtung eine Breite auf, bei der ein Kontaktbereich der Flüssigkeitsbehälter mit dem jeweiligen Band beidseitig über das Band hinausragt. Die einzelnen Flüssigkeitsbehälter, die sich bereits in den Gassen und auf den einzelnen Bändern befinden, haben ihren Schwerpunkt mittig auf dem jeweiligen Bandes, um so bspw. eine Schrägstellung zu verhindern. Da die Bänder schmäler sind als die Bodenflächen bzw. Kontaktflächen der Flüssigkeitsbehälter mit dem jeweiligen Band, verbleibt seitlich genug Raum, um eine Eingriffsfläche für die Rückhalteeinrichtungen zu bilden.

Gemäß einer weiteren Ausführungsvariante der erfindungsgemäßen Vorrichtung kann der Transportvorrichtung mindestens eine weitere Transportvorrichtung nachgeordnet sein. Diese weitere Transportvorrichtung wird nachstehend als Behältereinteiler bezeichnet. Der Behältereinteiler ist bspw. in und/oder an der Verpackungsmaschine und fluchtend mit der Transportvorrichtung angeordnet, so dass eine störungsfreie Übergabe der Flüssigkeitsbehälter von der Transportvorrichtung zum Behältereinteiler gewährt ist.

Ebenfalls können bei dem Behältereinteiler mehrere Trennwände vorgesehen sein, so dass sich auch auf diesem mehrere Gassenabschnitte bilden können, die mit den Gassen der Transportvorrichtung fluchten. In diesen Gassenabschnitten liegen die Flüssigkeitsbehälter somit vereinzelt und beabstandet zueinander vor. Der Abstand der Flüssigkeitsbehälter kann vorzugsweise einen Flaschendurchmesser betragen.

Der Behältereinteiler kann ebenfalls mehrere einzelne Bänder aufweisen, die auch mit einem gemeinsamen Antrieb betrieben werden können, um den Behältereinteiler mit einer konstanten Geschwindigkeit zu beaufschlagen.

Die Geschwindigkeit der einzelnen Bänder des Behältereinteilers ist vorzugsweise langsamer als die der Transportvorrichtung, da somit die Lücke zwischen den Flüssigkeitsbehältern am Übergang in die Verpackungsmaschine geschlossen werden kann. Um eine Lücke zwischen den Flüssigkeitsbehältern entstehen zu lassen, werden die Rückhalteeinrichtungen an der Transportvorrichtung betätigt, so dass die Flüssigkeitsbehälter von der Vorschubbewegung entkoppelt werden.

Bei der Überführung der Flüssigkeitsbehälter zur Verpackungsmaschine ist es wichtig, die Flüssigkeitsbehälter auf einen optimalen Abstand voneinander zu bringen und/oder einen optimalen Staudruck in den einzelnen Gassen mit den Flüssigkeitsbehältern auf den einzelnen Bändern zu ermöglichen. Dies wird mittels mindestens einer Detektoreinheit ermöglicht, die über ein Steuerungssystem mit den Rückhalteeinrichtungen in Wirkverbindung steht. Die Detektoreinheit ist vorzugsweise unmittelbar an einem Auslaufbereich bzw. am Ende der Transportvorrichtung angebracht. Bei der vorliegenden Erfindung ist diese bspw. oberhalb des Transportniveaus bzw. oberhalb der Oberseite der Flüssigkeitsbehälter, zwischen dem Übergang der Transportvorrichtung zum Behältereinteiler angebracht sein.

Um die passenden Werte bzw. Abstände der einzelnen Flüssigkeitsbehälter zu ermitteln, umfasst die Detektoreinheit mehrere optische Erfassungseinrichtungen, bspw. in Form von sog. Lichttaster. Diese Detektoreinheit kann somit einen Abstandsschwellenwert der einzelnen in den Gassen der Transportvorrichtung transportierten Flüssigkeitsbehälter bestimmen. Der Abstandsschwellenwert ist am Übergang zwischen der Transportvorrichtung und dem Behältereinteiler in der Verpackungsmaschine bestimmbar. Durch die Ermittlung des Abstandsschwellwertes ist die Zuschaltung bzw. Aktivierung der Rückhalteeinrichtung von den jeweiligen Bändern abhängig. D.h. die Rückhalteeinrichtung wird dann zugeschaltet, wenn der Abstandsschwellwert bei den Flüssigkeitsbehältern eine vorgegebene Grenze überschreitet. Wenn bspw. der Abstand der Flüssigkeitsbehälter zu gering ist, werden diese mit der Rückhalteeinrichtung angehoben und somit abgebremst. Ist der passende Abstand wieder erreicht, werden die Rückhalteeinrichtungen wieder gesenkt und die Flüssigkeitsbehälter werden mit der Bandgeschwindigkeit weitertransportiert. Dadurch wird erreicht, dass sich der Abstand zwischen den Flüssigkeitsbehältern letztendlich in der Verpackungsmaschine verringert. Somit ist es möglich, dass derjenige Abstand zwischen den Flüssigkeitsbehältern eingestellt wird, der für die nachfolgende in der Verpackungsmaschine vorgesehene Verpackung der einzelnen Flüssigkeitsbehältern, bzw. Behältergruppen vorgesehen ist.

Die Zuschaltung bzw. Abschaltung der Rückhalteeinrichtung erfolgt über das Steuerungssystem, welches mit der Detektoreinheit gekoppelt ist. Die Detektoreinheit übermittelt die Werte an das Steuerungssystem, das aus den erfassten Werten passende Steuerbefehle für die Rückhalteeinrichtung generiert und an diese weiter gibt.

Die vorliegende Erfindung betrifft weiterhin ein Verfahren zum Transportieren von Flüssigkeitsbehältern mit mindestens einer Transportvorrichtung auf mindestens zwei parallelen Bändern, die durch Trennwände voneinander räumlich getrennt sind, wobei die mindestens zwei Bänder gemeinsam und synchron angetrieben werden. Bei diesem Verfahren ist vorgesehen, dass die Flüssigkeitsbehälter innerhalb einer Gasse durch Aktivierung mindestens einer Rückhalteeinrichtung von der Vorschubbewegung des Bandes zumindest teilweise entkoppelt werden. Diese Entkoppelung erfolgt vorzugsweise dadurch, dass die Flüssigkeitsbehälter einer Gasse durch Anheben der Rückhalteeinrichtung von der Oberfläche des Bandes abgehoben werden. Auf diese Weise kann der Staudruck in den einzelnen Gassen auf einfache Weise und ohne Verzögerung reguliert werden.

Wenn im vorliegenden Zusammenhang von Flüssigkeitsbehälter die Rede ist, so sind davon grundsätzlich alle Arten von Flüssigkeits- und Getränkebehältern umfasst. Dies können Flaschen, Dosen etc. aus Mineralglas oder Kunststoff wie bspw. PET o. dgl. sein.

Im Folgenden sollen Ausführungsbeispiele die erfindungsgemäße Vorrichtung und deren Vorteile anhand der beigefügten Figuren näher erläutern.
Fig. 1 zeigt eine Draufsicht auf die Vorrichtung zum Transportieren von Flüssigkeitsbehälter bspw. zu einer Verpackungsmaschine.
Fig. 2 zeigt eine Teilansicht der Vorrichtung, welche in Fig. 1 mit dem gestrichelten Kreis gekennzeichnet ist.
Fig. 3 zeigt eine schematische Ansicht der Anordnung einer Detektoreinheit zur Ermittlung des Abstandsschwellwerts zwischen einzelnen Flüssigkeitsbehältern.
Fig. 4 zeigt ein Verhältnis eines Flüssigkeitsbehälters mit einem Band.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann, ohne dass damit eine abschließende Beschränkung der Erfindung verbunden ist.

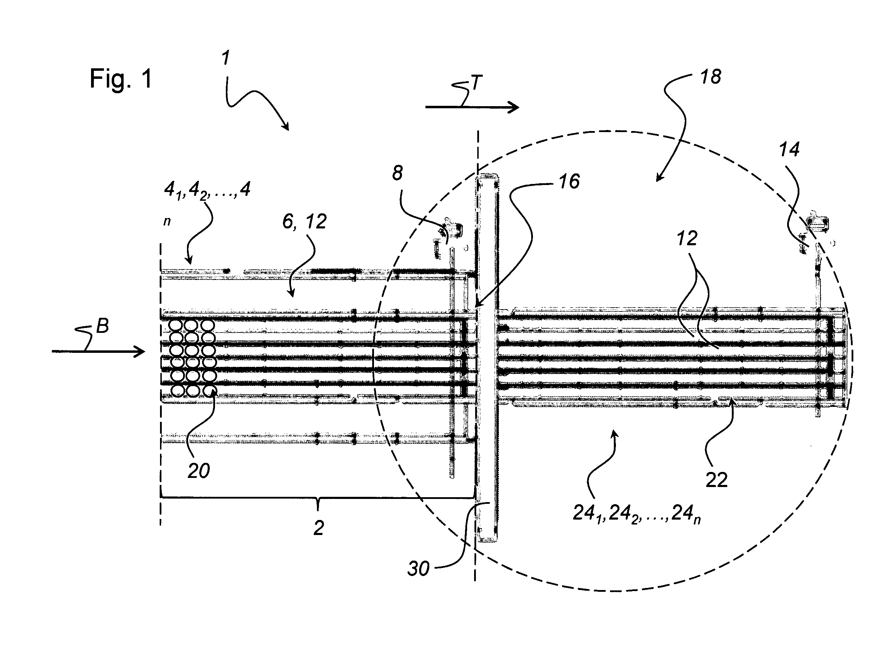

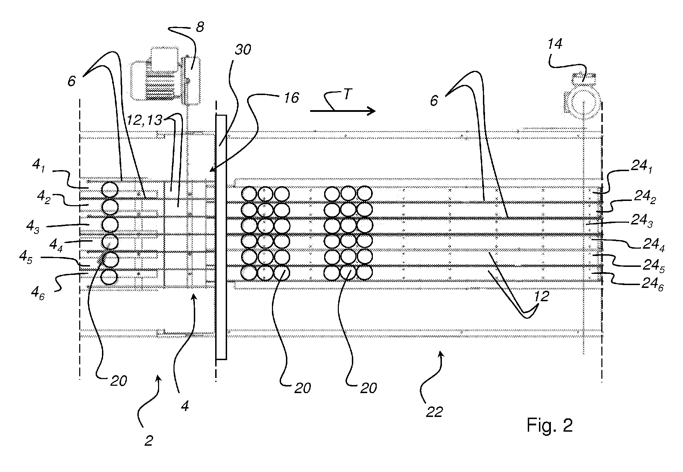

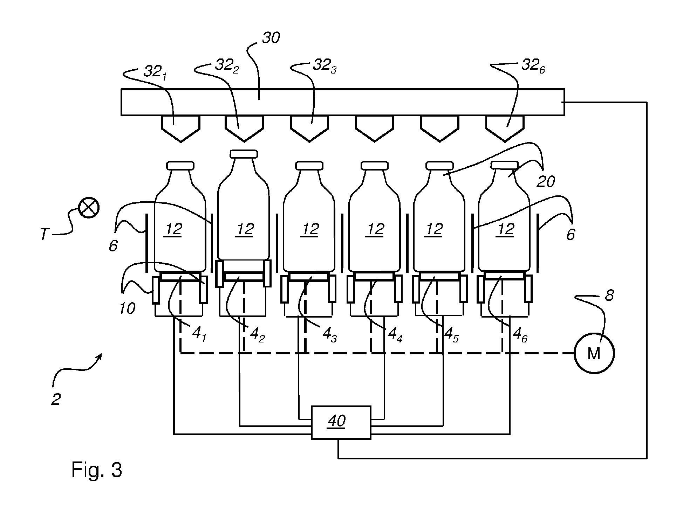

Fig. 1 zeigt eine Draufsicht auf die erfindungsgemäße Vorrichtung 1. Bei der in Fig. 1 gezeigten Ausführungsform ist die Vorrichtung 1 als Teil einer Verpackungsmaschine 18 dargestellt. Dieser Verpackungsmaschine 18 ist eine Transportvorrichtung 2 vorgeschaltet. Die Transportvorrichtung 2 besteht aus mehreren einzelnen Bändern 4₁, 4₂, ..., 4ₙ, die durch Trennwände 6 (vgl. Fig. 2 und 3) räumlich voneinander getrennt sind. Durch diese Trennwände 6 entstehen mehrere Gassen 12 (vgl. Fig. 2 und 3). Innerhalb dieser Gassen 12 können Flüssigkeitsbehälter 20 einzeln transportiert und der Verpackungsmaschine 18 bzw. einem Behältereinteiler 22 zugeführt werden.

Der Transportvorrichtung 2 werden die Flüssigkeitsbehälter 20 in Behälterrichtung B bereits in Reihe nacheinander über ein vorgeschaltetes Dosierband (nicht dargestellt) zugeführt. Die Flüssigkeitsbehälter 20 werden mittels eines Führungssystems auf dem Dosierband bereits in vorhandene Gassen, die ebenso mit Trennwänden räumlich von einander getrennt sind, geschoben. Somit lässt sich eine sichere Überführung der Flüssigkeitsbehälter 20 vom Dosierband auf die nachgeschaltete Transportvorrichtung 2 ermöglichen.

Nach der Zuführung der Flüssigkeitsbehälter 20 in die Gassen 12 (vgl. Fig. 2) der Transportvorrichtung 2 werden diese weiterhin in Reihe auf den einzelnen Bändern 4₁, 4₂, ..., 4ₙ für den weiteren Transport geführt. Die Transportrichtung T der Vorrichtung 1 ist in Fig. 1 mit einem Pfeil angedeutet.

Die Transportvorrichtung 2 ist mit einem Antrieb 8 verbunden, unabhängig vom vorgeschalteten Dosierband. Dieser Antrieb 8 treibt die einzelnen Bänder 4₁, 4₂, ..., 4ₙ der Transportvorrichtung 2 mit einer kontinuierlichen Geschwindigkeit an.

Der Behältereinteiler 22 in und/oder an der Verpackungsmaschine 18, wird ebenfalls mit einem einzigen Antriebsmotor 14 angetrieben. Dieser Antriebsmotor 14 bestimmt die gesamte Fördergeschwindigkeit des Behältereinteilers 22 sowie die Geschwindigkeit eines jeden Bandes 24₁, 24₂, ..., 24ₙ des Behältereinteilers 22. Somit wird nicht individuell die Geschwindigkeit in Stufen erhöht, sondern alle Bänder werden gleichmäßig über einen Antrieb angetrieben.

Die Geschwindigkeit des Behältereinteilers 22 ist vorzugsweise langsamer als die der Transportvorrichtung 2.

Die Trennwände 6 der Transportvorrichtung 2 verlaufen vom Anfang bis zum Ende dieser Vorrichtung 2, so dass auch an einem Auslaufbereich 16 der Transportvorrichtung 2, bzw. an einem Übergang zum Behältereinteiler 22, die Trennwände 6 (vgl. Fig. 2) vorhanden sind, die somit mehrere Gassenabschnitte 13 am Auslaufbereich 16 bilden. Diese Gassenabschnitte 13 fluchten mit den Gassen 12 der einzelnen Transportbänder 24₁, 24₂, ..., 24ₙ des Behältereinteilers 22.

Fig. 2 zeigt eine vergrößerte Draufsicht des in Fig. 1 mit dem gestrichelten Kreis gekennzeichneten Bereichs. Die Transportrichtung T der Flüssigkeitsbehälter 20 ist auch in Fig. 2 mit einem Pfeil dargestellt. Der Transportvorrichtung 2 ist der Antriebsmotor 8 zugeordnet, der die Geschwindigkeit der einzelnen Bänder 4₁, 4₂, ..., 4ₙ dieser Transportvorrichtung 2 gleichmäßig regelt.

Die einzelnen Bänder 4₁, 4₂, ..., 4ₙ sind durch Trennwände 6 voneinander räumlich getrennt. Somit entstehen Gassen 12, in denen die Flüssigkeitsbehälter 20 vereinzelt transportierbar sind. Die Gassen 12 der Transportvorrichtung 2 fluchten mit den Gassen 12 des Behältereinteilers 22 und sind entsprechend der Gassenabschnitte 13 der Transportvorrichtung 2 ausgebildet.

Am Übergang von der Transportvorrichtung 2 zum Behältereinteiler 22 der Verpackungsmaschine 18 ist eine Detektoreinheit 30 vorgesehen. Diese Detektoreinheit 30 prüft die ankommende Reihe der Flüssigkeitsbehälter 20 auf vorhandene Lücken. Die Detektoreinheit 30 ist als optische Erfassungseinrichtung ausgestaltet und kann bspw. eine Reihe von Lichttastern (vgl. Fig. 3) oder dgl. umfassen. Erst bei der Notwendigkeit zum Aufschließen von vorhandener Lücken zwischen den Flüssigkeitsbehältern 20 auf den einzelnen Bändern 4₁, 4₂, ..., 4ₙ, kann eine jeweilige Rückhalteeinrichtung 10 (vgl. Fig. 3) aktiviert werden. Durch die Aktivierung der Rückhalteeinrichtung 10 werden die Flüssigkeitsbehälter 20 des entsprechenden Bandes 4₁, 4₂, ..., 4ₙ abgebremst, indem diese vom jeweiligen Band leicht abgehoben werden. Das jeweilige Band 4ₙ läuft jedoch während dessen mit seiner eingestellten Geschwindigkeit weiter. Mit derartigen Vorgängen können die Lücken oder auch ein möglicher Staudruck der Flüssigkeitsbehälter 20 geregelt werden.

In Fig. 3 ist schematisch die Zuordnung der Detektoreinheit 30 zur Transportvorrichtung 2 dargestellt. Im gezeigten Ausführungsbeispiel und entsprechend der nachfolgenden Beschreibung hat die Transportvorrichtung 2 sechs Gassen 12 ausgebildet. Dies soll nicht als eine Beschränkung der Erfindung aufgefasst werden. Es ist für einen Fachmann selbstverständlich, dass je nach zu verpackenden Flüssigkeitsbehälter 20, bzw. nach Größe des zu verpackenden Flüssigkeitsbehälters 20 die Gassenzahl, bzw. die Gassenbreite entsprechend an die Flüssigkeitsbehälter 20 anpassbar ist. In der in Fig. 3 gezeigten Darstellung ist die Transportrichtung T in die gleiche Ebene hinein gerichtet.

Die Detektoreinheit 30 erstreckt sich quer über die Transportvorrichtung 2, bzw. über die einzelnen Bänder 24₁, 24₂, ..., 24ₙ des Behältereinteilers 22 (vgl. Fig. 2), d.h. das die Detektoreinheit 30 am Übergang der Transportvorrichtungen 2 angeordnet ist (vgl. Fig. 2). Es sollte auf alle Fälle sichergestellt sein, dass die Zeit ausreicht, um nach der Detektion einer Mindestgröße eines Abstandsschwellwerts die Rückhalteeinrichtung 10 zu aktivieren, so dass die Flüssigkeitsbehälter 20 vom jeweiligen Band 4₁, 4₂, ..., 4ₙ und der Transportrichtung T abgehoben werden. Dadurch wird die Haftreibung, die zwischen den Flüssigkeitsbehältern 20 und dem jeweiligen Band 4₁, 4₂, ..., 4ₙ vorhanden ist, aufgehoben. Mittels dieses Vorgangs kann der gewünschte Abstand zwischen den einzelnen Flüssigkeitsbehältern 20 wieder erreicht werden.

Die Rückhalteeinrichtungen 10 sind unterhalb des Förderniveaus der Flüssigkeitsbehälter 20, die auf den einzelnen Bändern 4₁, 4₂, ..., 4ₙ der Transportvorrichtung 2 stehen, angeordnet. Zudem sind die Rückhalteeinrichtungen 10 mit einem speziellen Steuerungssystem 40 verbunden. Dieses Steuerungssystem 40 nimmt Signale auf, die die Detektoreinheit 30 von entsprechenden Lichttastern 32₁, 32₂, ..., 32ₙ übermittelt bekommt und leitet diese Signale an die Rückhalteeinrichtungen 10 weiter. Die Detektoreinheit 30 ist zu diesem Zweck mit Lichttastern 32₁, 32₂, ..., 32ₙ versehen, die beim Übergang der Flüssigkeitsbehälter 20 von der Transportvorrichtung 2 zum Behältereinteiler 22 in den einzelnen Gassen 12 den Abstandsschwellwert bestimmen. Mittels einer derartigen Bestimmung des Abstandsschwellenwertes und durch die Signalübermittlung kann die Rückhalteeinrichtung 10 aktiviert oder deaktiviert werden. Im Falle einer Aktivierung einer Rückhalteeinrichtung 10 eines bestimmten Bandes 4₁, 4₂, ..., 4ₙ der Transportvorrichtung 2 werden die schienenartigen Einrichtungen 10 nach oben bewegt (vgl. von Fig. 3 bspw. den zweiten Flüssigkeitsbehälter 20 von links). In dieser Position befindet und/oder befinden sich die aktivierten Rückhalteeinrichtungen 10 somit oberhalb des Förderniveaus der Flüssigkeitsbehälter 20.

Anhand der Bestimmung des Abstandsschwellwerts werden die Rückhalteeinrichtungen 10 des entsprechenden Bandes 4₁, 4₂, ..., 4ₙ der Transportvorrichtung 2 entsprechend gesteuert, so dass die Flüssigkeitsbehälter 20 auf dem jeweiligen Band 4₁, 4₂, ..., 4ₙ abgebremst werden, um so den Staudruck der Flüssigkeitsbehälter 20 zu justieren und in einem optimalen Bereich zu halten. Bei diesem Vorgang wird die Geschwindigkeit der einzelnen Bänder 4₁, 4₂, ..., 4ₙ nicht separat geregelt.

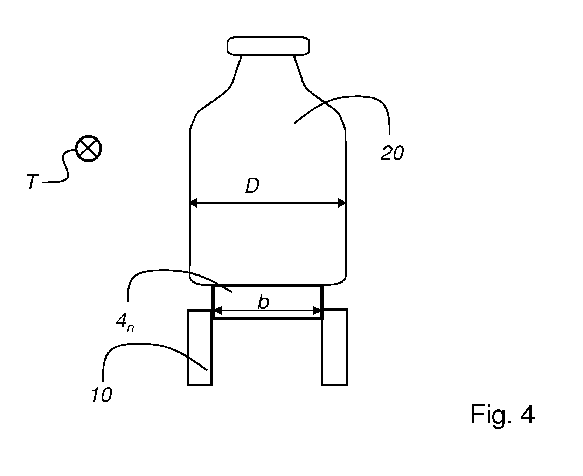

In Fig. 4 ist das Größenverhältnis des Flüssigkeitsbehälters 20 in Bezug auf ein Band 4ₙ dargestellt. Die einzelnen Bänder 4₁, 4₂, ..., 4ₙ der Transportvorrichtungen 2 sind in der Breite b schmäler als der Durchmesser D der Flüssigkeitsbehälter 20. D.h. die Flüssigkeitsbehälter 20 stehen mit ihrer Auflagefläche auf beiden Seiten der einzelnen Bändern 4₁, 4₂, ..., 4ₙ über. Nur so kann eine optimale Ansteuerung der Rückhalteeinrichtung 10 gewährleistet werden.

Die Erfindung wurde unter Bezugnahme auf eine bevorzugte Ausführungsform beschrieben. Es ist jedoch für einen Fachmann selbstverständlich, dass Abwandlungen und/oder Änderungen gemacht werden können, ohne dabei den Schutzbereich der nachstehenden Schutzansprüche zu verlassen.

### Bezugszeichenliste:

- 1: Vorrichtung
- 2: Transportvorrichtung
- 3: Dosierband
- 4: Einzelne Bänder
- 6: Trennwände
- 8: Antrieb
- 10: Rückhalteeinrichtung
- 12: Gasse
- 13: Gassenabschnitte
- 14: Antrieb
- 16: Auslaufbereich
- 18: Verpackungsmaschine
- 20: Flüssigkeitsbehälter
- 22: Behältereinteiler
- 24: Einzelne Bänder
- 30: Detektoreinheit
- 32: Lichttaster
- 40: Steuerungssystem
- b: Breite
- D: Durchmesser
- T: Transportrichtung

## Patentansprüche

1. Vorrichtung (1) zum Transportieren von Flüssigkeitsbehältern (20) mit einer Transportvorrichtung (2), die mindestens zwei parallele Bänder (4₁, 4₂, ..., 4ₙ) umfasst, die durch Trennwände (6) räumlich voneinander getrennt sind, wobei die mindestens zwei Bänder (4₁, 4₂, ..., 4ₙ) einen gemeinsamen Antrieb (8) aufweisen, **dadurch gekennzeichnet, dass** mindestens eine Rückhalteeinrichtung (10) kontinuierlich beidseitig entlang eines jeden Bandes (4₁, 4₂, ..., 4ₙ) angeordnet ist, und dass mindestens eine Rückhalteeinrichtung (10) derart bewegbar ausgestaltet ist, dass die Flüssigkeitsbehälter (20) innerhalb einer Gasse (12) von der Vorschubbewegung des Bandes (4₁, 4₂, ..., 4ₙ) zumindest teilweise entkoppelbar sind.

2. Vorrichtung nach Anspruch 1, die beidseitig jedes Bandes (4₁, 4₂, ..., 4ₙ) jeweils eine Rückhalteeinrichtung (10) aufweist, wobei beide Rückhalteeinrichtungen (10) in gleicher Richtung bewegbar sind.

3. Vorrichtung nach Anspruch 1, wobei beide Rückhalteeinrichtungen (10) jedes Bandes (4₁, 4₂, ..., 4ₙ) synchron in gleicher, im Wesentlichen vertikaler Richtung bewegbar sind.

4. Vorrichtung nach Anspruch 2 oder 3, wobei die Flüssigkeitsbehälter (20) vollständig von den Bändern (4₁, 4₂, ..., 4ₙ) entkoppelbar sind.

5. Vorrichtung nach einem der Ansprüche 1 bis 4, wobei die Rückhalteeinrichtung (10) in einer nicht aktivierten Position bzw. in Ruhelage unterhalb eines Förderniveaus der einzelnen Bänder (4₁, 4₂, ..., 4ₙ) der Transportvorrichtung (2) angeordnet ist.

6. Vorrichtung nach einem der Ansprüche 1 bis 5, wobei die einzelnen Bänder (4₁, 4₂, ..., 4ₙ) eine Breite (b) aufweisen, so dass ein Kontaktbereich der Flüssigkeitsbehälter (20) mit dem jeweiligen Band (4₁, 4₂, ..., 4ₙ) beidseitig über das Band (4ₙ) hinausragt.

7. Vorrichtung nach einem der Ansprüche 1 bis 6, wobei der Transportvorrichtung (2) eine weitere Transportvorrichtung (22) nachgeordnet ist.

8. Vorrichtung nach Anspruch 7, wobei die weitere Transportvorrichtung (22) ebenfalls Gassen (12) umfasst, die jeweils mit den Gassen (12) der Transportvorrichtung (2) fluchten.

9. Vorrichtung nach Anspruch 7 oder 8, wobei die weitere Transportvorrichtung (22) ebenfalls einen gemeinsamen Antrieb (8) aufweist.

10. Vorrichtung nach einem der Ansprüche 1 bis 9, wobei mindestens eine Detektoreinheit (30) unmittelbar an einem Auslaufbereich (16) der Flüssigkeitsbehälter (20) bzw. am Ende der Transportvorrichtung (2) angebracht ist.

11. Vorrichtung nach Anspruch 10, wobei die Detektoreinheit (30) zwischen der Transportvorrichtung (2) und der weitere Transportvorrichtung (22) angebracht ist.

12. Vorrichtung nach einem der Ansprüche 10 bis 11, wobei die Detektoreinheit (30) mehrere Lichttaster (32₁, 32₂, ..., 32ₙ) umfasst.

13. Vorrichtung nach einem der Ansprüche 1 bis 12, wobei die Rückhalteeinrichtung (10) mit der Detektoreinheit (30) über ein Steuerungssystem (40) gekoppelt ist.

14. Verfahren zum Transportieren von Flüssigkeitsbehältern (20) mit einer Transportvorrichtung (2) auf mindestens zwei parallelen Bändern (4₁, 4₂, ..., 4ₙ), die durch Trennwände (6) voneinander räumlich getrennt sind, wobei die mindestens zwei Bänder (4₁, 4₂, ..., 4ₙ) gemeinsam und synchron angetrieben werden, **dadurch gekennzeichnet, dass** die Flüssigkeitsbehälter (20) innerhalb einer Gasse (12) durch Aktivierung mindestens einer Rückhalteeinrichtung (10) von der Vorschubbewegung des Bandes (4₁, 4₂, ..., 4ₙ) zumindest teilweise entkoppelt werden.

15. Verfahren nach Anspruch 14, bei dem die Flüssigkeitsbehälter (20) einer Gasse (12) durch Anheben der Rückhalteeinrichtung (10) von der Oberfläche des Bandes (4₁, 4₂, ..., 4ₙ) abgehoben werden.
